# EUROPÄISCHE PATENTSCHRIFT

(11) **EP 2 302 004 B1**
(45) Veröffentlichungstag und Bekanntmachung des Hinweises auf die Patenterteilung: **08.08.2018**
(21) Anmeldenummer: 10176576.6
(22) Anmeldetag: 14.09.2010
(51) Int. Cl.: C09C 1/56, C09D 11/037, C09D 11/324, G03G 9/09

(54) **Ruß, ein Verfahren zu seiner Herstellung sowie seine Verwendung**
Carbon black, method for its manufacture and application
Suie, son procédé de fabrication et d'utilisation

(30) Priorität: 28.09.2009 DE 102009045060
(43) Veröffentlichungstag der Anmeldung: 30.03.2011
(73) Patentinhaber: Orion Engineered Carbons GmbH, 60528 Frankfurt am Main (DE)
(72) Erfinder: Bergemann, Klaus, Dr., 50170 Kerpen-Sindorf (DE); Dannehl, Manfred, dr., 63796 Kahl am Main (DE); Oelmann, Ansgar, 63571 Gelnhausen (DE); Schwartze, Britta, dr., 20099 Hamburg (DE); Tontrup, Christoph, Dr., 63755 Alzenau (DE)
(74) Vertreter: f & e patent

(56) Entgegenhaltungen:
- EP-A1- 0 845 712
- WO-A2-2008/058114
- US-B1- 6 440 628

## Beschreibung

Die Erfindung betrifft einen Ruß, ein Verfahren zu seiner Herstellung sowie seine Verwendung.

Ruße kommen in großem Umfang als Schwarzpigment sowie als Verstärker und Füllstoff zur Anwendung. Sie werden mit unterschiedlichen Eigenschaften nach verschiedenen Verfahren produziert. Am häufigsten ist die Herstellung durch oxidative Pyrolyse von kohlenstoffhaltigen Rußrohstoffen. Hierbei werden die Rußrohstoffe bei hohen Temperaturen in Anwesenheit von Sauerstoff unvollständig verbrannt. Zu dieser Klasse von Ruß-Herstellverfahren gehören zum Beispiel das Furnaceruß-Verfahren, das Gasruß-Verfahren und das Flammruß-Verfahren. Andere Verfahren sind beispielsweise das Acetylenverfahren, das Thermalrußverfahren und das Plasmaverfahren.

Als kohlenstoffhaltige Rußrohstoffe werden überwiegend aromatische Rußöle eingesetzt. Der Produktstrom der oxidativen Pyrolyse besteht aus einem Wasserstoff und Kohlenmonoxid enthaltenden Abgas und darin suspendiertem feinteiligen Ruß, der in einer Filteranlage vom Abgas abgetrennt wird (Ullmanns Enzyklopädie der technischen Chemie 4.Auflage, Band 14, Seite 633 - 649).

Je nach Herstellverfahren und Prozessbedingungen kann ein Ruß mit kleinen Mengen von organischen Verbindungen verunreinigt sein. Diese organischen Verbindungen können aus einem Kohlenstoffgerüst bestehen, welches wiederum aus polykondensierten aromatischen Systemen aufgebaut ist. Das Gerüst kann je nach konkreter Verbindung noch weiter verzweigt oder substituiert sein.

Die Verbindungen, deren Kohlenstoffgerüst im wesentlichen aus polykondensierten aromatischen Systemen besteht, werden meist als polykondensierte aromatische Kohlenwasserstoffe (PAK) bezeichnet. PAK werden als gesundheitsschädliche Verbindungen angesehen (Sudip K. Samanta, Om V. Singh and Rakesh K. Jain: "Polycyclic aromatic hydrocarbons: environmental pollution and bioremediation", TRENDS in Biotechnology Vol.20 No.6 June 2002, Seite 243 -248).

Während die PAK in Systemen, in denen der Ruß fest in eine Matrix gebunden ist oder die keinen Kontakt zum Menschen ermöglichen, meist kein Problem darstellen, sind für einige Anwendungsgebiete aufgrund der Gesundheitsgefährdung durch die PAK nur Ruße mit sehr niedrigem Gehalt an polykondensierten aromatischen Kohlenwasserstoffen (PAK) einsetzbar. Dies betrifft zum Beispiel den Einsatz von Ruß in Anwendungen mit Kontakt zu Lebensmitteln.
So hat beispielsweise die Amerikanische Food and Drug Administration den PAK-Gehalt für Ruße mit Lebensmittelkontakt auf 0,5 ppm (Code of Federal Regulations, Title 21, Volume 3, Part 170-199, § Colorants for Polymers, High purity Furnace Blacks, Page 372-376; CITE 21CFR178.3297) begrenzt.

In gewissem Rahmen ist der PAK-Gehalt bereits während der Herstellung, zum Beispiel bei Furnacerußen im Reaktor, beeinflussbar. Durch hohe Temperaturen und/oder spätes Quenchen können PAK-Gehalte von zum Beispiel 100-150 ppm auf 25-40 ppm reduziert werden (US 4138471).

Wenn es jedoch durch die Reaktorfahrweise nicht gelingt, besonders geringe PAK-Gehalte zu erreichen, können zur Entfernung vorhandener PAK die Ruße nachbehandelt werden.

Es ist bekannt, dass die polykondensierten aromatischen Kohlenwasserstoffe auf Ruß durch thermische Behandlung von geperltem Furnace-Ruß in einem Fließbett bei Anwesenheit von mindestens 10% Sauerstoff reduziert werden (US 4,138,471). Dabei können für die Verbindungen Benzo(a)pyren, Dibenz(a,h)anthrazen oder 7,12-Dimethylbenz(a)anthrazen, Mengen von jeweils unter 2 ppb erreicht werden.

Ferner ist bekannt, die polykondensierten aromatischen Kohlenwasserstoffe auf Kohlenstoffnanomaterialien durch Extraktion mit einem Lösungsmittel zu erniedrigen (WO 03/021017).

Weiter ist ein Toner bekannt (US 6,440,628), der unter anderem Ruß mit weniger als 10 ppm PAK-Gehalt, bezogen auf Naphtalen, Acenaphtylen, Acenaphthen, Fluoren, Phenanthren, Anthrazen, Fluoranthen, Pyren, Benzo(a)anthrazen, Chrysen, Benzo(b)fluoranthen, Benzo(a)pyren, Benzo(k,j)fluoranthen, Dibenzo(a,h)anthrazen, Indeno(1,2,3-cd)pyren und Benzo(g,h,l)perylen, enthält.

Des weiteren sind Kautschukmischungen bekannt, enthaltend einen Ruß mit einer spezifischen Oberfläche von 13-19 m²/g und 0,25-0,28 Gew.-% polykondensierte aromatische Kohlenwasserstoffe (SU 899589) beziehungsweise einen Ruß mit einer spezifischen Oberfläche von 50-57 m²/g und 0,21-0,23 Gew.-% polyaromatische Kohlenwasserstoffe (SU 899589).

Weiter ist aus EP 1102127 ein Toner bekannt, der einen Ruß mit weniger als 15 ppm PAK-Gehalt, beispielsweise Verbindungen wie Benzpyren, Anthrazen-benzopyren, Phenanthren, Pyren und ähnliche enthält.

Außerdem ist aus US 6,087,434 eine Pigmentpräparation bekannt, die einen Ruß mit weniger als 10 ppm PAK-Gehalt, beispielsweise Verbindungen wie Naphtalen, Fluorathen, Fluoranthin, Pyren, Chrysen, Benzopyrene und ähnliche, enthält und einen spezifischen Sauerstoffgehalt von 0,2 - 0,4 mg/m² aufweist.

Es sind zusätzlich medizinisches Kontrastmittel aus US 6,599,496 bekannt, die ein Kohlenstoffpigment enthalten, dessen PAK-Gehalt unter 0,5 ppm angegeben wird.

In WO 2008/058114 sind Ruße beschrieben, deren PAK-Gehalt durch thermische Behandlung oder Extraktion auf Werte von 1-20 ppm oder auf Werte ≤10 ppm gesenkt werden konnten.

WO 2008/058114 beschreibt Ruße mit niedrigem PAK-Gehalt und deren Verwendung in Kautschukzusammensetzungen.

US 6,440,628 und EP 845 712 betreffen Tonerzusammensetzungen, die Ruße mit einem niedrigem PAK-Gehalt enthalten.

Nachteile der bekannten Ruße sind die hohen Anteile an polykondensierten aromatischen Kohlenwasserstoffen, die gesundheitsschädlich sind.

Ein weiterer Nachteil speziell bei thermischer Behandlung von Rußen ist die relativ starke Absenkung des Oxidationsgrades, beziehungsweise der Flüchtigen Bestandteile bei 950°C und der damit verbundenen Reduktion der funktionellen Gruppen auf der Rußoberfläche, sodass insbesondere bei oxidierten Ausgangsrußen die gewünschten Oberflächengruppen teilweise oder ganz entfernt werden.

Aufgabe der Erfindung ist es, niedrig oberflächige Ruße zur Verfügung zu stellen, die einen niedrigen PAK-Wert aufweisen und gegebenenfalls einen hohen Gehalt an Flüchtigen Bestandteilen bei 950°C haben.

Gegenstand der Erfindung ist ein Ruß, welcher dadurch gekennzeichnet ist, dass der Gehalt an polykondensierten aromatischen Kohlenwasserstoffen gemessen nach der 22 PAK-Methode kleiner als 5 ppm, bevorzugt kleiner 0,5 ppm, besonders bevorzugt kleiner 0,4 ppm, ganz besonders bevorzugt kleiner 0,2 ppm, und die STSA-Oberfläche, gemessen nach ASTM D-6556, < 90 m²/g, vorzugsweise ≤ 80 m²/g, besonders bevorzugt 30-80 m²/g, ganz besonders bevorzugt 55-80 m²/g, ist und der Gehalt an Flüchtigen Bestandteilen bei 950°C > 0.6% ist.

Der Gehalt an polykondensierten aromatischen Kohlenwasserstoffen der 22 PAK-Methode wird aus der Aufsummierung folgenden Verbindungen berechnet:
Naphtalen, Acenaphthylen, Acenaphthen, Fluoren, Phenanthren, Anthracen, Fluoranthen, Pyren, Benzo(ghi)fluoranthen, Cyclopenta(cd)pyren, Chrysen, Benzo(e)pyren, Perylen, Benzo(ghi)perylen, Anthantren, Coronen, Benz(a)anthracen, Benzo(k)fluoranthen, Dibenz(ah)anthracen, Benzo(a)pyren, Indeno(1,2,3-cd)pyren, Benzo(b)fluoranthen und Benzo(j)fluoranthen, wobei Benzo(b)fluoranthen und Benzo(j)fluoranthen als eins gezählt werden.

Bei der 22 PAK-Methode wird der Ruß mittels Soxhletapparatur extrahiert, die Detektion wird mittels Gaschromatographie durchgeführt und die Berechnung erfolgt unter Berücksichtigung der vorgenannten 22 PAKs ("Determination of PAH content of carbon black", Cabot Corporation, Docket 95F-01631, 8.Juli 1994, von der USamerikanischen Food and Drug Administration (FDA) festgeschrieben (Code of Federal Regulations, Title 21, Volume 3, Part 170-199, § Colorants for Polymers, High purity Furnace Blacks, Page 372-376; CITE 21CFR178.3297)).

Der erfindungsgemäße Ruß kann einen Gehalt an polykondensierten aromatischen Kohlenwasserstoffen gemessen nach der 15 PAK-Methode kleiner als 5 ppm, bevorzugt kleiner 1 ppm, besonders bevorzugt kleiner 0,7 ppm, ganz besonders bevorzugt kleiner 0,12 ppm, haben.

Der Gehalt an polykondensierten aromatischen Kohlenwasserstoffen der 15 PAK-Methode wird aus der Aufsummierung folgenden Verbindungen berechnet:
Benz(a)anthracen, Benzo(k)fluoranthen, Dibenz(ah)anthracen, Benzo(a)pyren, Indeno(1,2,3-cd)pyren, Benzo(b)fluoranthen und Benzo(j)fluoranthen,Dibenz(ah)acridin, Dibenz(aj)acridin, 7H-Dibenzo(cg)carbazol, Dibenzo(ae)pyren, Dibenzo(ah)pyren, Dibenzo(ai)pyren, Dibenzo(al)pyren und 5-Methylchrysen, wobei Benzo(b)fluoranthen und Benzo(j)fluoranthen jeweils einzeln gezählt werden (8th report on carcinogens, US Department of Health and Human Services, Seite III-869).

Der erfindungsgemäße Ruß kann eine BET-Oberfläche (ASTM D-6556) von 10 bis 1000 m²/g, bevorzugt von 20 bis 120 m²/g, aufweisen.

Der erfindungsgemäße Ruß kann einen DBP-Wert (ASTM D-2414) von 10 bis 200 ml/100g, bevorzugt von 20 bis 120 ml/100g, aufweisen.

Der erfindungsgemäße Ruß kann eine Transmission (ASTM D-1618) von größer 96 %, bevorzugt von größer 99 %, aufweisen.

Der erfindungsgemäße Ruß kann einen Toluolextrakt (ASTM D-4527) von kleiner 0,04 %, bevorzugt von kleiner 0,03 %, aufweisen.

Der Ruß kann ein Furnaceruß, Gasruß, Channelruß, Flammruß, Thermalruß, Acetylenruß, Plasmaruß, Inversionsruße, bekannt aus DE 195 21 565 und DE 198 39 925, Si-haltige Ruße, bekannt aus WO 98/45361 oder DE 19613796, oder metallhaltige Ruße, bekannt aus WO 98/42778, Lichtbogenruß und Ruße, die Nebenprodukte chemischer Produktionsprozesse sind, sein.

Der erfindungsgemäße Ruß kann einen pH-Wert (ASTM D-1512) von kleiner 7, bevorzugt von kleiner 6, besonders bevorzugt von kleiner 5, ganz besonders bevorzugt von kleiner 3,5, aufweisen.

Der erfindungsgemäße Ruß kann einen Gehalt an Flüchtigen Bestandteilen bei 950°C (DIN 53552) von > 2%, bevorzugt von > 4,5%, insbesondere bevorzugt von > 12%, haben. Der erfindungsgemäße Ruß kann ein oxidierter Ruß, vorzugsweise ein oxidierter Gasruß, sein.

Ein weiterer Gegenstand der Erfindung ist ein Verfahren zur Herstellung von Ruß mit einem Gehalt an polykondensierten aromatischen Kohlenwasserstoffen gemessen nach der 22 PAK-Methode kleiner als 5 ppm, bevorzugt kleiner 0,5 ppm, besonders bevorzugt kleiner 0,4 ppm, ganz besonders bevorzugt kleiner 0,2 ppm, welches dadurch gekennzeichnet ist, dass man den Ausgangsruß mit elektromagnetischer Strahlung, vorzugsweise UV-, beispielsweise fernes UV, VIS-, IR-, beispielsweise fernes IR, Radiowellen-, beispielsweise UKW, oder Mikrowellen-Strahlung, besonders bevorzugt Mikrowellenstrahlung mit 0,9-140 GHz, insbesondere bevorzugt Mikrowellenstrahlung mit 2,45 GHz, behandelt.

Der Ausgangsruß kann eine STSA-Oberfläche (ASTM D-6556) von < 90 m²/g, vorzugsweise ≤ 80 m²/g, besonders bevorzugt 30-80 m²/g, ganz besonders bevorzugt 55-80 m²/g, haben.

Der Ausgangsruß kann eine BET-Oberfläche (ASTM D-6556) von 10 bis 1000 m²/g, bevorzugt von 20 bis 120 m²/g, aufweisen.

Der Ausgangsruß kann einen DBP-Wert (ASTM D-2414) von 10 bis 200 ml/100g, bevorzugt von 20 bis 120 ml/100g, aufweisen.

Der Ausgangsruß kann eine Transmission (ASTM D-1618) von größer 96 %, bevorzugt von größer 99 %, aufweisen.

Der Ausgangsruß kann einen Toluolextrakt (ASTM D-4527) von kleiner 0,04 %, bevorzugt von kleiner 0,03 %, aufweisen.

Der Ausgangsruß kann Pulver, nass- oder trockengeperlter Ruß sein. Der Ausgangsruß kann ein Furnaceruß, Gasruß, Channelruß, Flammruß, Thermalruß, Acetylenruß, Plasmaruß, Inversionsruße, bekannt aus DE 195 21 565 und DE 198 39 925, Si-haltige Ruße, bekannt aus WO 98/45361 oder DE 19613796, oder metallhaltige Ruße, bekannt aus WO 98/42778, Lichtbogenruß und Ruße, die Nebenprodukte chemischer Produktionsprozesse sind, sein. Der Ausgangsruß kann durch vorgelagerte Reaktionen, beispielsweise Oxidation, beispielsweise mit Ozon, Salpetersäure, Stickstoffoxide oder Hypochlorit, aktiviert sein.

Der Ausgangsruß kann ein Gummiruß oder Farbruß sein.

Weitere Ausgangsruße können sein: Leitfähigkeitsruß, Ruß zur UV-Stabilisierung, Ruß als Füllstoff in Systemen, wie zum Beispiel in Kautschuk, Bitumen oder Kunststoff, Ruß als Reduktionsmittel in der Metallurgie.

Vorzugsweise kann der Ausgangsruß ein Gasruß, bevorzugt ein oxidierter Gasruß, sein.

Vorzugsweise kann die Behandlung mit elektromagnetischer Strahlung unter inerter Atmosphäre erfolgen.

Die inerte Atmosphäre kann durch Stickstoff, Edelgas, Luft-Wasserdampfgemische, Wasserdampf oder Stickstoff-Wasserdampfgemisch erzeugt werden. Die Behandlung kann bei Normaldruck, leichtem Überdruck oder Vakuum durchgeführt werden.

Die Übertragung der elektromagnetischen Strahlungsenergie kann berührungslos und ohne Trägermedium erfolgen.

Eine Abreicherung der PAKs auf kleiner als 5 % der Beladung des Ausgangsrußes kann möglich sein. Für die Mikrowellen-(MW-) behandelten Proben kann man mit steigender Verweilzeit eine niedrigere PAK-Konzentration erreichen.

In einer bevorzugten Ausführungsform wird der Ausgangsruß mit Mikrowellen-Strahlung, besonders bevorzugt Mikrowellenstrahlung mit 0,9-140 GHz, insbesondere bevorzugt Mikrowellenstrahlung mit 2,45 GHz, unter inerter Atmosphäre behandelt.

Der durch das erfindungsgemäße Verfahren hergestellte Ruß kann eine STSA-Oberfläche von < 90 m²/g, vorzugsweise ≤ 80 m²/g, besonders bevorzugt 30-80 m²/g, ganz besonders bevorzugt 55-80 m²/g, haben.

Der durch das erfindungsgemäße Verfahren hergestellte Ruß kann eine BET-Oberfläche (ASTM D-6556) von 10 bis 1000 m²/g, bevorzugt von 20 bis 120 m²/g, aufweisen.

Der durch das erfindungsgemäße Verfahren hergestellte Ruß kann einen DBP-Wert (ASTM D-2414) von 10 bis 200 ml/100g, bevorzugt von 20 bis 120 ml/100g, aufweisen.

Der durch das erfindungsgemäße Verfahren hergestellte Ruß kann eine Transmission (ASTM D-1618) von größer 96 %, bevorzugt von größer 99 %, aufweisen.

Der durch das erfindungsgemäße Verfahren hergestellte Ruß kann einen Toluolextrakt (ASTM D-4527) von kleiner 0,04 %, bevorzugt von kleiner 0,03 %, aufweisen.

Die Behandlung mit elektromagnetischer Strahlung kann bei Temperaturen von 150-600°C, vorzugsweise von 300-400°C, durchgeführt werden.

Die Behandlung mit elektromagnetischer Strahlung kann in einer Reaktionszeit von 1-120 min, vorzugsweise von 5-30 min, durchgeführt werden.

Das erfindungsgemäße Verfahren kann in einer Vorrichtung durchgeführt werden, die aus einem Reaktor besteht, dessen Reaktorwand, ein Teil der Reaktorwand oder ein Fenster für die eingesetzte elektromagnetische Strahlung transparent ist.

Die für die eingesetzte elektromagnetische Strahlung transparente Wand oder Fenster kann Glas, Quarzglas oder dicht gesintertes Al₂O₃ enthalten. Die Reaktorwandtemperatur kann deutlich unter der Produkttemperatur sein.

Das für die eingesetzte elektromagnetische Strahlung transparente Fenster kann ein Glasfenster sein. Die Temperatur im bestrahlten Ruß kann 0 bis 1000°C betragen. Der Ruß kann mittels eines Levitators (Induktion, Licht, Schall) oder einer Gasströmung (Wirbelschicht) in Schwebe gehalten werden.

Die Materialien des Reaktors können hinsichtlich der Strahlungstransparenz entsprechend angepasst werden.

Die elektromagnetischen Strahlerquellen, vorzugsweise Magnetrons, können geschützt vom Produkt, zum Beispiel an der Außenseite der Reaktorwand im Bereich des strahlungsdurchlässigen Bereichs, angeordnet sein.

Die Strahlungsenergie kann gezielt und fokussiert mit hoher Leistungsdichte auf den im Reaktor befindlichen Ruß berührungslos, das heißt ohne Trägermedium, übertragen werden.

Der Energieeintrag kann gesteuert- und geregelt werden.

Als Strahlerquelle können eingesetzt werden: NIR-, IR-Strahlungsquellen (Wellenlänge λ = 500 µm - 750 nm), wie elektrische Lampen beziehungsweise Keramikstrahler, gasbeheizte Katalyt- oder Oberflächenstrahler oder gas-/ölbeheizte Porenbrenner, VIS-Lampen (Wellenlänge λ = 380 nm - 750 nm), UV-Lampen (Wellenlänge λ = 380 nm - 172 nm) oder
Mikrowellenstrahler (Frequenzen ω = 900 MHz - 140 GHz), wie zum Beispiel Magnetrons und Gyrotrons.

Als Reaktoren können Reaktortypen, die keine bewegten Teile aufweisen, die durch den Ruß und die PAK-Stoffe oder das Stoffgemisch korrosiv angegriffen werden und so zur Kontamination des hergestellten Produktes führen, eingesetzt werden.

Als Reaktoren können Reaktoren für Normal-, Über- und Unterdruck eingesetzt werden, wobei im Reaktor definierte Gasatmosphären (zum Beispiel Inertgas) einstellbar ist.

Der Reaktor kann ein Rohr-Reaktor mit externer Vorrichtung zum Vermischen und Fördern sein, beispielsweise ein Reaktor mit mechanischen Vorrichtungen zum Durchmischen, wie zum Beispiel Schwing-/Rüttelvorrichtung, Drehrohr, Schwingförderer oder Schnecke.

Der Reaktor kann ein Wirbelschicht-, Festbett- oder Blasensäulen-Reaktor sein. Der Reaktor kann mit Vorrichtungen zum Durchmischen des Einsatzstoffes bzw. Einsatzstoffgemisches (Ausgangsruß) ausgestattet sein. Das Durchmischen kann auch mittels Durchströmen des Stoffes oder Stoffgemisches im Reaktor, wie zum Beispiel mittels Durchflussreaktor, Blasensäule mit oder ohne Füllkörper, Rieselbettreaktor, Wirbelschichtreaktor oder Fallturm, erfolgen.

Der Reaktor kann außer der elektomagnetischen Strahlung eine zusätzliche Vorrichtung zum Wärmeeintrag enthalten (Hybridreaktor).

Gemäß dem erfindungsgemäßen Verfahren kann die Energie gezielt mit hoher Energiedichte und ohne Trägermedium im Produkt eingekoppelt werden, wobei durch die Energiedissipation der elektromagnetischen Strahlung im Produkt dieses innerlich erwärmt wird. Erfindungsgemäß lassen sich damit kurze Reaktionszeiten realisieren.

Mit dem erfindungsgemäßen Verfahren lassen sich Produkte herstellen, die extrem arm an Verunreinigungen sind.

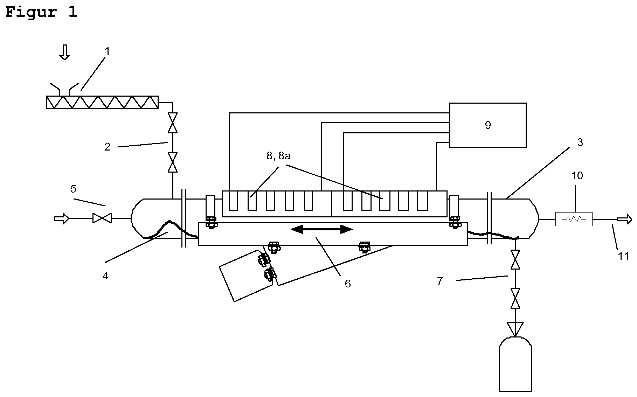

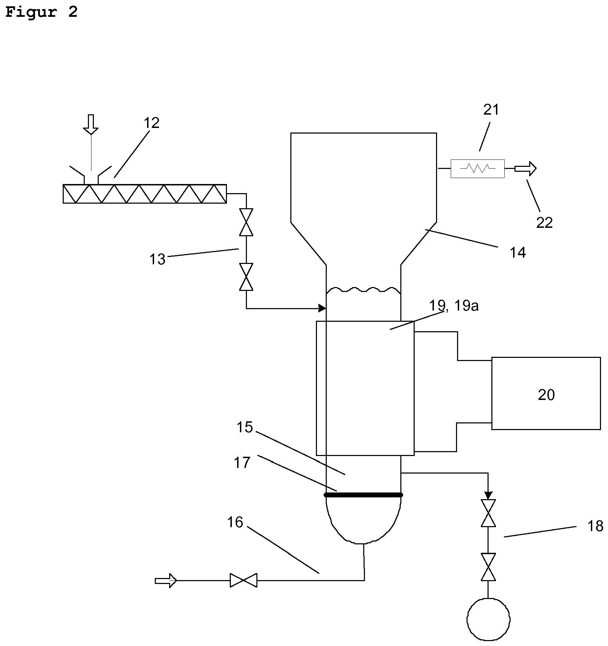

Zur Durchführung des erfindungsgemäßen Verfahrens können der in Figur 1 gezeigte Infrarot(IR)-Förderrohr-Reaktor oder der in Figur 2 gezeigte Mikrowellen-Festbett/Wirbelschicht-Reaktor eingesetzt werden.

### Indexliste für IR-Förderrohr-Reaktor (Figur 1):

1. Ausgangsrußdosierung
2. Schleuse
3. IR-transparenter Reaktor
4. Ruß zur Wärmebehandlung
5. Transportgasstrom
6. Schwingungsantrieb
7. Produkt-Ausschleusung
8. IR-Strahlermodule mit 8a einem oder mehreren IRtransparenten Fenstern
9. Elektrische Ansteuerung für die IR-Strahlermodule
10. Begleitheizung
11. Abgasstrom

Gemäß Figur 1 werden der Ausgangsruß oder das Ausgangsrußgemisch mittels der Dosiervorrichtung 1 über die Schleuse 2 dem Reaktor 3 zudosiert. Es fällt als Feststoffpulver oder Granulat 4 zur PAK-Abreicherung auf den Boden des Reaktors 3 und wird mittels Schwingförderer 6 zu der Produkt-Ausschleusung 7 transportiert. Ein in der Regel beheizter Gasstrom 5 kann zusätzlich durch den Reaktor geschleust und zum Abtransport der gasförmigen Produkte vorwiegend PAK und deren Zersetzungsprodukte genutzt werden.

Während des Transportes des eindosierten Rußes durch den Reaktor findet die Reinigung des Rußes mittels der IR-Strahlermodule 8, die über die Vorrichtung 9 elektrisch angesteuert werden, statt. Die IR-Strahlung wird über das IR-strahlentransparente Fenster 8a in den Reaktor eingekoppelt und führt dann im Ruß zur schnellen Erwärmung. Der Gasstrom 11 wird über die begleitbeheizte Transportleitung 10 aus dem Reaktor ausgeschleust.

Indexliste für Mikrowellen-Festbett/Wirbelschicht-Reaktor (Figur 2):
12. Ausgangsrußdosierung
13. Schleuse
14. MW-transparenter Reaktor
15. Ruß zur Wärmebehandlung als Festbett, Wirbelschicht oder Blasensäule
16. Transportgasstrom
17. Anströmboden
18. Produkt-Ausschleusung
19. Resonator mit 19a einem oder mehreren MW-transparenten Fenstern
20. Mikrowellen-Quelle
21. Begleitheizung
22. Abgasstrom

Gemäß Figur 2 wird der Ausgangsruß oder das Ausgangsrußgemisch mittels der Dosiervorrichtung 12 über die Schleuse 13 dem Mikrowellen Reaktor 14 zudosiert. Der Ausgangsstoff fällt als Stoff oder Stoffgemisch zur PAK-Abreinigung mittels Festbett, Wirbelschicht oder Blasensäule 15 entgegen dem Transportgasstrom 16 auf den Anströmboden 17, wobei bei Bedarf der Überschuss an Ruß 15 über die Ausschleusevorrichtung 18 ausgeschleust werden kann.

Der Ruß 15 wird mittels dem Transportgasstrom 16 in Richtung Mikrowellenfeld - hervorgerufen durch die Mikrowellen-Strahler-Quelle 20, und den Resonator 19 - gefördert und/oder in Bewegung gehalten. Die Mikrowellenstrahlung dringt dabei nahezu verlustfrei durch das Fenster 19a in den Reaktor ein.

Während des Transportes des eindosierten Rußes durch den Reaktor findet die Reinigung des Rußes mittels der Mikrowellen-Strahlungsbehandlung statt.

Der Gasstrom 22 wird über die begleitbeheizte Transportleitung 21 aus dem Reaktor ausgeschleust.

Als Gas kann Inertgas, Stickstoff oder eine Stickstoff/Wasserdampf-Mischung in der Apparatur eingesetzt werden.

Ein weiterer Gegenstand der Erfindung ist die Verwendung des erfindungsgemäßen Rußes als Füllstoff, Verstärkerfüllstoff, UV-Stabilisator, Leitfähigkeitsruß oder Pigment.

Der erfindungsgemäße Ruß kann in Kautschuk, Kunststoff, Druckfarben, Tinten, Inkjet-Tinten, Tonern, Lacken, Farben, Klebstoffen, Batterien, Pasten, Papier, Brennstoffzellen, Bitumen, Beton und anderen Baustoffen eingesetzt werden. Er kann als Reduktionsmittel in der Metallurgie und als Leitruß angewendet werden.

Der erfindungsgemäße Ruß kann insbesondere für Anwendungen in Materialien mit Lebensmittelkontakt, für Verpackungsdruckfarben, für Toneranwendungen oder Inkjet-Tinten verwendet werden.

Ein weiterer Gegenstand der Erfindung ist eine Kunststoffmischung, welche dadurch gekennzeichnet ist, dass diese mindestens einen Kunststoff und einen erfindungsgemäßen Ruß enthält.

Die erfindungsgemäße Kunststoffmischung kann 40 - 99,9 Gew.-%, vorzugsweise 90 - 98 Gew.-%, Kunststoff, bezogen auf die Kunststoffmischung, enthalten. Die erfindungsgemäße Kunststoffmischung kann 0,1 - 60 Gew.-%, vorzugsweise 1,5 - 3 Gew.-%, erfindungsgemäßen Ruß, bezogen auf die Kunststoffmischung, enthalten. Der Kunststoff kann ein thermoplastisches Polymer, ein duroplastisches Polymer, ein thermoplastisches Elastomer, vorzugsweise Polyolefin, besonders bevorzugt Polyethylen und Polypropylen, Polyvinylchlorid, Melaminformaldehydharz, Phenolharz, Epoxidharz, Polyamid, Polyester, Polyoxymethylen, Polymethylmethacrylat, Polycarbonat, Polystyrol, Polyethylenterephtalat oder Acrylnitrilbutadienstyrol-Polymer sowie Mischungen oder Co-Polymere aus obigen Komponenten sein.

Ein weiterer Gegenstand der Erfindung ist eine Tinte, welche dadurch gekennzeichnet ist, dass diese weniger als 5 Gew.-% Bindemittel, mindestens ein Feuchthaltemittel, ein Lösungsmittel und einen erfindungsgemäßen Ruß enthält.

Die erfindungsgemäße Tinte kann 5 bis 95 Gew.- %, vorzugsweise 30 bis 80 Gew.-%, Lösungsmittel, bezogen auf die Tinte, enthalten. Die erfindungsgemäße Tinte kann 0,1 bis 10 Gew.-%, vorzugsweise 1 bis 5 Gew.-%, erfindungsgemäßen Ruß, bezogen auf die Tinte, enthalten. Das Lösungsmittel kann Wasser, Alkohole, Ketone, Ester, aliphatische oder aromatische Kohlenwasserstoffe sein.

Ein weiterer Gegenstand der Erfindung ist eine Druckfarbe, welche dadurch gekennzeichnet ist, dass diese mindestens ein Bindemittel, ein Lösungsmittel und einen erfindungsgemäßen Ruß enthält.

Die erfindungsgemäße Druckfarbe kann 10 bis 30 Gew.-% Bindemittel, bezogen auf die Druckfarbe, enthalten. Die erfindungsgemäße Druckfarbe kann 10 bis 75 Gew.-% Lösungsmittel, bezogen auf die Druckfarbe, enthalten. Die erfindungsgemäße Druckfarbe kann 3 bis 40 Gew.-% erfindungsgemäßen Ruß, bezogen auf die Druckfarbe, enthalten. Das Lösungsmittel kann Wasser, Alkohol, Keton, Acetat oder jegliche Art von Öl bzw. eine Mischung mit mindestens einer dieser Komponenten sein.

Ein weiterer Gegenstand der Erfindung ist ein Toner, welcher dadurch gekennzeichnet ist, dass dieser mindestens ein Fließmittel, einen Kunststoff und einen erfindungsgemäßen Ruß enthält.

Der erfindungsgemäße Toner kann 30 bis 95 Gew.-%, vorzugsweise 60 bis 90 Gew.-%, Kunststoff, bezogen auf den Toner, enthalten. Der erfindungsgemäße Toner kann 1 bis 20 Gew.-%, vorzugsweise 2 bis 15 Gew.-%, erfindungsgemäßen Ruß, bezogen auf den Toner, enthalten. Der Kunststoff kann ein Polyester-Harz, ein Styrol-Copolymer oder ein Cyclo-Olefin-Copolymer sein. Das Fließmittel kann Kieselsäure, vorzugsweise pyrogene Kieselsäure, oder Ruß sein.

Vorteil des erfindungsgemäßen Rußes ist der niedrige Gehalt an schädlichen polykondensierten aromatischen Kohlenwasserstoffen.

Ein weiterer Vorteil ist, dass die erfindungsgemäßen Ruße trotz abgereicherter PAKs einen vergleichsweise hohen Oxidationsgrad, gemessen als Flüchtige Bestandteile bei 950°C, aufweisen.

### Beispiele

Die rußanalytischen Kenndaten der hergestellten Ruße werden nach folgenden Normen ermittelt:

| | |
|---|---|
| STSA-Oberfläche: | ASTM D-6556 |
| BET-Oberfläche: | ASTM D-6556 |
| DBP-Absorption: | ASTM D-2414 |

Als Ausgangsruß in den Beispielen wird
ein Ausgangsruß A geperlt, mit 83 m²/g STSA-Oberfläche und einer Ölzahl (nach Fließpunktmethode DIN EN ISO 787-5) von 460 g/100g verwendet.

### Beispiel 1:

Zur Reduzierung des Gehalts an polykondensierten aromatischen Kohlenwasserstoffen (PAKs) wird geperlter Ruß in einer IR-Pilotanlage wie in Figur 1 beschrieben behandelt. Die Verweilzeit und die Temperatur ist in Tabelle 1 beschrieben.

Als Ausgangsruß wird der Ausgangsruß A eingesetzt. In der hier beschriebenen Versuchsreihe wird der PAK-Gehalt anhand der 22 PAK-Methode und 15 PAK-Methode untersucht (Tabelle 1) .

**Tabelle 1:**

| Probe | Verweilzeit [min] | Temp. [°C] | STSA [m²/g] | Spülgas | 15 PAK-Methode [mg/kg] | Abreicherung auf % von c0 | 22 PAK-Methode [mg/kg] | Abreicherung auf % von c0 |
|---|---|---|---|---|---|---|---|---|
| 1 Erfind ungsge mäßer Ruß | 120 | 450 | 89,7 | N₂ | 0, 65 | 1,1 | 4,17 | 0,5 |
| 2 Ausgan gsruß A (Ref.) | - | - | 82,8 | - | 61,7 (c0) | 100 | 905, 0 (c0) | 100 |

Es zeigte sich, dass eine Abreicherung auf kleiner als 1 % der Ausgangsbeladung an PAKs möglich ist.

### Beispiel 2:

Zur Reduzierung des Gehalts an polyaromatischen Kohlenwasserstoffen (PAKs) wird geperlter Ruß in einer Mikrowellenanlage wie in Figur 2 beschrieben behandelt. Die Verweilzeit und die Temperatur sind in Tabelle 2 beschrieben.

Als Ausgangsruß wird der Ausgangsruß A eingesetzt. In der hier beschriebenen Versuchsreihe wird der PAK-Gehalt anhand der 22 PAK-Methode und 15 PAK-Methode untersucht (Tabelle 2).

**Tabelle 2**

| Probe | Verweilzeit [min] | Temp. [°C] | STSA [m²/g] | Spülgas | 15 PAK-Methode [mg/kg] | Abreicherung auf % von c0 | 22 PAK-Methode [mg/kg] | Abreicherung auf % von c0 |
|---|---|---|---|---|---|---|---|---|
| | | | | | | | | |
| 2 Ausga ngsru β A (Ref. ) | - | - | 82,8 | - | 61,7 (c0) | 100 | 905, 0 (c0) | 100 |
| 3 Erfin dungs gemäß er Ruß | 5 | 400 | 83,0 | N₂ | n.d. | n.d. | 0,44 | 0,1 |

| | | | | | | | | |
|---|---|---|---|---|---|---|---|---|
| n.d.= nicht detektierbar | | | | | | | | |

Bei der in der Mikrowelle behandelten Probe wird eine sehr starke Abreicherung der PAKs auf 0,1 % der Ausgangsbeladung erreicht.

### Beispiel 3

In einer Mikrowellen-Anlage wie in Figur 2 beschrieben wird eine Menge von ca. 80g Ausgangsruß A eingefüllt. Der Mikrowellen-Reaktor wird mit Stickstoff (5 l/h) vor Versuchsbeginn gespült, anschließend mit Mikrowelle bestrahlt und nach Versuchsende unter Stickstoff auf eine Temperatur <120°C abgekühlt.

Variiert werden die Verweilzeiten und die Temperaturen von 1 - 20 min bzw. 400 - 600°C. Die Zeit wird nach erreichen der Zieltemperatur gemessen.

Die Temperaturaufzeichnung erfolgt über einen PC.

In der Tabelle 3 werden verschiedene Parameter variiert.

**Tabelle 3:**

| Probe | Bestrahlungsdauer (min) | Temperatur (°C) | STSA (m²/g) | Flüchtige Bestandteile 950°C % | Reduzierung Flüchtige Bestandteile 950°C um (%) | 22 PAK-Methode (ppm) |
|---|---|---|---|---|---|---|
| 2 Ausgangs ruß A (Ref.) | 0 | 0 | 82,8 | 4,4 | - | 905 |
| 4 Erfindun gsgemäße r Ruß | 10 | 400 | 80,2 | 3,1 | 30 | 1,250 |
| 5 Erfindun gsgemäße r Ruß | 1 | 600 | 81,9 | 1,4 | 68 | 4, 860 |
| 6 Erfindun gsgemäße r Ruß | 5 | 600 | 82,9 | 1,9 | 57 | 1,620 |
| 7 Erfindun gsgemäße r Ruß | 10 | 600 | 78,8 | 1,6 | 64 | 0,357 |

Bei den erfindungsgemäßen Rußen werden die PAKs deutlich reduziert. Bei 600°C werden die PAKs auf weniger als 0,4 ppm reduziert.

### Beispiel 4:

Vergleichsbeispiel zur einfachen Temperaturbehandlung im Trockenschrank

100g von einem Ausgangsruß mit 75 m²/g STSA-Oberfläche und einer Ölzahl (nach Fließpunktmethode DIN EN ISO 787-5) von 460 g/100g werden auf einem Edelstahlblech auf einer Fläche von 30 x 30 cm verteilt. Unter Stickstoff wird im Trockenschrank 1 h bei 300°C getempert.

**Tabelle 4:**

| Probe | Verweilzeit [min] | Temp. [°C] | STSA [m²/g] | Spülgas | 22 PAK-Methode [mg/kg] | Abreicherung auf % von c0 |
|---|---|---|---|---|---|---|
| Ausgangsruß | - | - | 75 | - | 1670 (c0) | 100 |
| Getemperter Ruß | 60 | 300 | 74 | N2 | 250 | 15 |

Die Temperaturbehandlung im Trockenschrank (Tabelle 4) zeigt eine geringere Abreicherung an PAKs gegenüber den Rußen hergestellt mit dem erfindungsgmäßen Verfahren.

## Patentansprüche

1. Ruß, **dadurch gekennzeichnet, dass** der Gehalt an polykondensierten aromatischen Kohlenwasserstoffen gemessen nach der 22 PAK-Methode kleiner als 5 ppm und die STSA-Oberfläche < 90m²/g ist und dass der Gehalt an Flüchtigen Bestandteilen bei 950°C > 0,6% ist.

2. Ruß gemäß Anspruch 1, **dadurch gekennzeichnet, dass** der Gehalt an polykondensierten aromatischen Kohlenwasserstoffen kleiner 0,5 ppm ist.

3. Ruß gemäß einem der Ansprüche 1 oder 2, **dadurch gekennzeichnet, dass** der Gehalt an Flüchtigen Bestandteilen bei 950°C > 2% ist.

4. Ruß gemäß einem der Ansprüche 1 bis 3, **dadurch gekennzeichnet, dass** der Toluolextrakt kleiner 0,04 % ist.

5. Verfahren zur Herstellung von Ruß mit einem Gehalt an polykondensierten aromatischen Kohlenwasserstoffen, gemessen nach der 22 PAK-Methode, kleiner als 5 ppm, **dadurch gekennzeichnet, dass** man den Ausgangsruß mit elektromagnetischer Strahlung behandelt.

6. Verfahren zur Herstellung des Rußes gemäß Anspruch 5, **dadurch gekennzeichnet, dass** man als elektromagnetische Strahlung Mikrowellenstrahlung einsetzt.

7. Verfahren zur Herstellung des Rußes gemäß einem der Ansprüche 5 und 6, **dadurch gekennzeichnet, dass** man eine inerte Atmosphäre verwendet.

8. Verfahren zur Herstellung des Rußes gemäß einem der Ansprüchen 6-8, **dadurch gekennzeichnet, dass** man als Ausgangsruß einen Gasruß einsetzt.

9. Verwendung des Rußes nach einem der Ansprüche 1 oder 2 in Kautschuk, Kunststoff, Druckfarben, Tinten, Inkjet-Tinten, Tonern, Lacken, Farben, Klebstoffen, Batterien, Pasten, Papier, Brennstoffzellen, Bitumen, Beton und anderen Baustoffen.

10. Kunststoffmischung, **dadurch gekennzeichnet, dass** diese mindestens einen Kunststoff und einen Ruß gemäß Anspruch 1 enthält.

11. Tinte, **dadurch gekennzeichnet, dass** diese weniger als 5 Gew.-% Bindemittel, mindestens ein Feuchthaltemittel, ein Lösungsmittel und einen Ruß gemäß Anspruch 1 enthält.

12. Toner, **dadurch gekennzeichnet, dass** dieser mindestens ein Fließmittel, ein Kunststoff und einen Ruß gemäß Anspruch 1 enthält.

13. Druckfarbe, **dadurch gekennzeichnet, dass** diese mindestens ein Bindemittel, ein Lösungsmittel und einen Ruß gemäß Anspruch 1 enthält.

## Claims

1. Carbon black, **characterized in that** the content of polycyclic aromatic hydrocarbons measured by the 22 PAH method is less than 5 ppm and the STSA surface area is less than < 90 m²/g and that the content of volatile constituents at 950°C is > 0.6%.

2. Carbon black according to Claim 1, **characterized in that** the content of polycyclic aromatic hydrocarbons is less than 0.5 ppm.

3. Carbon black according any of claims 1 or 2, **characterized in that** the content of volatile constituents at 950°C is > 2%.

4. Carbon black according to any of Claims 1 to 3, **characterized in that** the toluene extract is less than 0.04%.

5. Process for preparing carbon black with a content of polycyclic aromatic hydrocarbons, measured by the 22 PAH method, of less than 5 ppm, **characterized in that** the starting carbon black is treated with electromagnetic radiation.

6. Process for preparing carbon black according to Claim 5, **characterized in that** the electromagnetic radiation used is microwave radiation.

7. Process for preparing carbon black according to any of Claims 5 and 6, **characterized in that** an inert atmosphere is used.

8. Process for preparing carbon black according to any of Claims 6-8, **characterized in that** the starting carbon black used is a gas black.

9. Use of the carbon black according to any of Claims 1 or 2 in rubber, plastics, printing inks, liquid inks, inkjet inks, toners, coating materials, paints, adhesives, batteries, pastes, paper, fuel cells, bitumen, concrete and other building materials.

10. Polymer mixture, **characterized in that** it comprises at least one polymer and a carbon black according to Claim 1.

11. Liquid ink, **characterized in that** it comprises less than 5% by weight of binder, at least one humectant, a solvent and a carbon black according to Claim 1.

12. Toner, **characterized in that** it comprises at least one fluidizer, a plastic and a carbon black according to Claim 1.

13. Printing ink, **characterized in that** it comprises at least one binder, a solvent and a carbon black according to Claim 1.

## Revendications

1. Suie, **caractérisée en ce que** la teneur en hydrocarbures aromatiques polycondensés, mesurée selon la méthode 22 PAK, est inférieure à 5 ppm, et la surface STSA est < 90 m²/g, et **en ce que** la teneur en constituants volatils est > 0,6 %, à 950 °C.

2. Suie selon la revendication 1, **caractérisée en ce que** la teneur en hydrocarbures aromatiques polycondensés est inférieure à 0,5 ppm.

3. Suie selon une des revendications 1 ou 2, **caractérisée en ce que** la teneur en composants volatils est > 2 %, à 950 °C.

4. Suie selon une des revendications 1 à 3, **caractérisée en ce que** l'extrait de toluène est inférieur à 0,04 %.

5. Procédé de fabrication de suie avec une teneur en hydrocarbures aromatiques polycondensés, mesurée selon la méthode 22 PAK, inférieure à 5 ppm, **caractérisé en ce que** l'on traite la suie de départ avec un rayonnement électromagnétique.

6. Procédé de fabrication de la suie selon la revendication 5, **caractérisé en ce que** le rayonnement électromagnétique utilisé est un rayonnement micro-onde.

7. Procédé de fabrication de la suie selon une des revendications 5 et 6, **caractérisé en ce que** l'on utilise une atmosphère inerte.

8. Procédé de fabrication de la suie selon une des revendications 6 à 8, **caractérisé en ce que** l'on utilise du noir de fumée en tant que suie de départ.

9. Utilisation de la suie selon une des revendications 1 ou 2, dans du caoutchouc, de la matière plastique, des encres d'imprimerie, des encres, des encres à jet d'encre, des toners, des vernis, des peintures, des adhésifs, des batteries, des pâtes, du papier, des piles à combustible, du bitume, du béton et d'autres matériaux de construction.

10. Mélange de matières plastiques, **caractérisé en ce que** celui-ci contient au moins une matière plastique et une suie selon la revendication 1.

11. Encre, **caractérisée en ce que** celle-ci contient moins de 5 % en poids de liant, au moins un agent humectant, un solvant et une suie selon la revendication 1.

12. Toner, **caractérisé en ce que** celui-ci contient au moins un agent de fluage, une matière plastique et une suie selon la revendication 1.

13. Encre d'impression, **caractérisée en ce que** celle-ci contient au moins un liant, un solvant et une suie selon la revendication 1.
